# EUROPEAN PATENT APPLICATION

(11) **EP 4 817 916 A1**
(43) Date of publication of application: **07.10.2026**
(21) Application number: 24895428.1
(22) Date of filing: 14.05.2024
(51) Int. Cl.: B60K 1/04, B62D 25/20, B62D 21/00

(54) **LOWER VEHICLE BODY OF VEHICLE BODY STRUCTURE, DISMOUNTING AND MOUNTING METHOD THEREFOR, VEHICLE BODY STRUCTURE, AND VEHICLE**

(30) Priority: 30.11.2023 CN 202311634864
(71) Applicant: Contemporary Amperex Intelligence Technology (Shanghai) Limited, Shanghai 201306 (CN)
(72) Inventor: MAO, Weizhong, Shanghai 201306 (CN); WU, Zhenrong, Shanghai 201306 (CN); PENG, Yan, Shanghai 201306 (CN); HE, Bin, Shanghai 201306 (CN)
(74) Representative: Gong, Jinping
(86) International application number: PCT/CN2024/093202
(87) International publication number: WO 2025/112317

(57) **Abstract**

A lower vehicle body (20) of a vehicle body structure (100), a dismounting and mounting method therefor, a vehicle body structure (100), and a vehicle. The lower vehicle body (20) comprises a front cabin assembly (21), a battery assembly (22), and a rear floor assembly (23). The front part of the battery assembly (22) detachably mates with the front cabin assembly (21), and the rear part of the battery assembly (22) detachably mates with the rear floor assembly (23). The battery assembly (22) is adapted to detachably mate with an upper vehicle body (10) of the vehicle body structure (100) relative to the front cabin assembly (21) and the rear floor assembly (23).

## Description

### CROSS-REFERENCE TO RELATED APPLICATIONS

This application claims priority to the Chinese Patent Application No. 202311634864.4, filed by Contemporary Amperex Intelligence Technology (Shanghai) Limited on November 30, 2023, and entitled "LOWER VEHICLE BODY OF VEHICLE BODY STRUCTURE AND ASSEMBLY AND DISASSEMBLY METHOD THEREOF, VEHICLE BODY STRUCTURE, AND VEHICLE", which is incorporated herein by reference in its entirety.

### TECHNICAL FIELD

This application relates to the field of battery technology, and in particular, to a lower vehicle body of a vehicle body structure and an assembly and disassembly method thereof, a vehicle body structure, and a vehicle.

### BACKGROUND

Cell-to-chassis technology (that is, CTC technology) is a technology that integrates a battery pack and a chassis together, and has become a main research and development field for improving efficiency and reducing costs. However, the integrated design makes the assembly and disassembly operations of the battery pack complex, which is not conducive to after-sales maintenance.

### SUMMARY

Embodiments of this application provide a lower vehicle body of a vehicle body structure, which facilitates maintenance and replacement of a battery assembly.

According to a first aspect, an embodiment of this application provides a lower vehicle body of a vehicle body structure, including: a front compartment assembly, a battery assembly, and a rear floor assembly, where a front portion of the battery assembly is detachably engaged with the front compartment assembly, and a rear portion of the battery assembly is detachably engaged with the rear floor assembly; and the battery assembly is adapted to be detachably engaged with an upper vehicle body of the vehicle body structure separately relative to the front compartment assembly and the rear floor assembly.

In the above technical solution, the battery assembly is integrated into the lower vehicle body, which helps to reduce the number of parts and reduce the total weight of the lower vehicle body. In addition, the battery assembly is separately disassembled relative to the front compartment assembly and the rear floor assembly, so that when the battery assembly needs maintenance and replacement, only the battery assembly needs to be disassembled, without needing to disassemble the front compartment assembly and the rear floor assembly together, thereby greatly improving the convenience of assembly and disassembly, and helping to improve the efficiency of replacement and maintenance and improve the user experience.

In some embodiments, the front portion of the battery assembly abuts against the front compartment assembly; and/or the rear portion of the battery assembly abuts against the rear floor assembly.

In the above technical solution, abutment can improve the connection strength of the battery assembly.

In some embodiments, the front compartment assembly includes a first connection portion, where the first connection portion is located on a side of the front portion of the battery assembly along a left-right direction; a first connection member is detachably inserted through the first connection portion and the battery assembly along the left-right direction; the rear floor assembly includes a second connection portion; the second connection portion is located on a side of the rear portion of the battery assembly along the left-right direction; and a second connection member is detachably inserted through the second connection portion and the battery assembly along the left-right direction.

In the above technical solution, the assembly and disassembly of the first connection member and the second connection member can be performed on a side of the vehicle body structure, without interfering with the connection between the front compartment assembly and the upper vehicle body, and without needing to disassemble the front compartment assembly and the rear floor assembly.

In some embodiments, a first sealing member is disposed between a side surface of the front portion of the battery assembly and the first connection portion; and a second sealing member is disposed between a side surface of the rear portion of the battery assembly and the second connection portion.

In the above technical solution, the first sealing member and the second sealing member can improve the airtightness between different components of the lower vehicle body, helping to improve the airtightness of an engine compartment and a rear compartment.

In some embodiments, the front portion of the battery assembly is located below the front compartment assembly, and the rear portion of the battery assembly is located below the rear floor assembly; the battery assembly is provided with a first connection structure; the first connection structure is configured to be connected to at least one of the front compartment assembly and the rear floor assembly; and the first connection structure is adapted to be assembled and disassembled along an up-down direction.

In the above technical solution, the first connection structure can be disassembled from a lower side; and after the connection of the first connection structure is released, the battery assembly can move directly downward to separate from the upper vehicle body, the front compartment assembly, and the rear floor assembly. In addition, the front compartment assembly and the rear floor assembly do not interfere with the disassembly movement of the battery assembly.

In some embodiments, a first sealing member is disposed between an upper surface of the front portion of the battery assembly and the front compartment assembly; and a second sealing member is disposed between an upper surface of the rear portion of the battery assembly and the rear floor assembly.

In the above technical solution, the provision of the first sealing member and the second sealing member can improve the airtightness between components of the lower vehicle body, thereby helping to improve the airtightness of the engine compartment and the rear compartment; and the first connection structure and the second connection structure can improve the sealing effect and stability of the first sealing member and the second sealing member.

In some embodiments, the first connection structure is fixedly disposed on the battery assembly and adapted to be connected to the front compartment assembly or the rear floor assembly from bottom to top.

In the above technical solution, the first connection structure can move up and down synchronously with the battery assembly, so that the connection of the battery assembly is released, and the battery assembly can be moved out downward, thereby helping to improve the assembly and disassembly efficiency.

In some embodiments, the first connection structure includes a first fastener and a first mounting hole provided on the battery assembly; the first mounting hole extends along the up-down direction; and the first fastener is inserted upward through the first mounting hole and connected to the front compartment assembly or the rear floor assembly.

In the above technical solution, the assembly and disassembly of the first fastener can be operated from a lower side of the lower vehicle body, and during disassembly, the first fastener moves downward without position interference with an upper structure, facilitating the separate assembly and disassembly of the battery assembly. In addition, the first fastener can improve the connection strength of the battery assembly.

In some embodiments, the battery assembly is provided with a first avoidance hole located below the first mounting hole and in communication with the first mounting hole; and a diameter of the first avoidance hole is greater than an outer diameter of the first fastener.

In the above technical solution, a length of the first fastener along the up-down direction is less than a dimension of the battery assembly along the up-down direction, helping to reduce the dimension of the first fastener while ensuring the connection strength requirements. In addition, the first avoidance hole avoids the first fastener, so that the assembly and disassembly of the first fastener are not interfered.

In some embodiments, the first sealing member and/or the second sealing member is an elastic sealing ring; and the elastic sealing ring is configured to be in press-fit engagement with the battery assembly.

In the above technical solution, the pressure formed by the connection of the battery assembly is configured to press the elastic sealing ring, helping to improve the sealing effect. In addition, when the battery assembly needs to be disassembled, the pressing force on the elastic sealing ring can be removed by releasing a fixing structure of the battery assembly. The elastic sealing ring can separate from the battery assembly, making the assembly and disassembly of the battery assembly convenient.

In some embodiments, the first sealing member and/or the second sealing member is an adhesive; and the adhesive is configured to be in adhesive engagement with the battery assembly.

In the above technical solution, the adhesive has adhesiveness, can achieve a better sealing effect, and is not prone to misalignment during assembly that otherwise affects the sealing effect. When the battery assembly needs to be disassembled, the adhesive can be removed by tearing, without affecting the disassembly of the battery assembly.

In some embodiments, a material of the adhesive includes butyl mastic.

In the above technical solution, the butyl mastic is an adhesive with relatively weak adhesiveness, which can reduce the difficulty of tearing and removal while achieving sealing.

In some embodiments, the battery assembly includes a box and a battery cell provided in the box, where the box includes: a frame, where the frame includes a sill beam, and the front compartment assembly and the rear floor assembly are both connected to the frame; and a bottom plate, where a peripheral edge of the bottom plate is connected to a lower end of the frame.

In the above technical solution, the sill beam is connected to a wall of the frame to improve the overall structural strength of the box; or the sill beam directly serves as the wall of the frame to reduce the number of parts of the battery assembly and reduce the space occupied by the box, thereby increasing the energy density, and reducing the weight of the entire vehicle.

In some embodiments, the box further includes a cover, and a peripheral edge of the cover is connected to an upper end of the frame.

In the above technical solution, it is convenient to seal the upper end of the frame through the cover before the battery assembly cooperates with the upper vehicle body, helping to improve the sealing effect and operational convenience.

In some embodiments, the cover includes a front floor.

In the above technical solution, the front floor is integrated into the battery assembly and is disassembled and assembled together with the battery assembly, helping to reduce the number of parts of the cover, reduce the occupied space and weight of the box, and increase the energy density.

According to a third aspect, an embodiment of this application further provides a vehicle body structure, including an upper vehicle body and the above lower vehicle body of a vehicle body structure, where the lower vehicle body is mounted to a lower side of the upper vehicle body to cooperatively define a passenger compartment.

In the above technical solution, the battery assembly is integrated into the lower vehicle body, which helps to reduce the number of parts and reduce the total weight of the lower vehicle body. In addition, the battery assembly is separately disassembled relative to the front compartment assembly and the rear floor assembly, so that when the battery assembly needs maintenance and replacement, only the battery assembly needs to be disassembled, without needing to disassemble the front compartment assembly and the rear floor assembly together, thereby greatly improving the convenience of assembly and disassembly, and helping to improve the efficiency of replacement and maintenance and improve the user experience.

In some embodiments, an upper surface of at least a part of a sidewall of the battery assembly includes an engagement surface, and the engagement surface abuts against the upper vehicle body.

In the above technical solution, the engagement surface abutting against the upper vehicle body helps to improve the connection strength between the battery assembly and the upper vehicle body.

In some embodiments, the sidewall is provided with a plurality of the engagement surfaces, and the plurality of the engagement surfaces are arranged along an inside-outside direction of the sidewall and staggered along a height in an up-down direction.

In the above technical solution, the plurality of engagement surfaces allows an upper surface to be formed as a stepped surface, so that the stepped surface can be used to achieve limiting in the inside-outside direction and supporting limiting in the up-down direction, thereby helping to improve the connection strength between the battery assembly and the upper vehicle body. In addition, multi-point connection in the inside-outside direction can be achieved to improve the connection reliability.

In some embodiments, a middle portion of the battery assembly is provided with a second connection structure, and the second connection structure is connected to the upper vehicle body and adapted to be assembled and disassembled along an up-down direction.

In the above technical solution, the second connection structure is formed as a Z-direction connection structure, so that during disassembly, the second connection structure can be disassembled from the lower side of the lower vehicle body without interference from other structures of the upper vehicle body and the lower vehicle body, facilitating the separate disassembly of the battery assembly and making the operation more convenient.

In some embodiments, the second connection structure includes a second fastener and a second mounting hole provided on the battery assembly, where the second mounting hole extends along the up-down direction; and the second fastener is inserted upward through the second mounting hole and connected to the upper vehicle body.

In the above technical solution, the assembly and disassembly of the second fastener can be operated from the lower side of the lower vehicle body, and during disassembly, the second fastener moves downward without position interference with an upper structure, facilitating the separate assembly and disassembly of the battery assembly. In addition, the second fastener can improve the connection strength between the battery assembly and the upper vehicle body.

In some embodiments, the second connection structure is fixedly disposed on the battery assembly and adapted to be connected to the upper vehicle body from bottom to top.

In the above technical solution, the second connection structure can move up and down synchronously with the battery assembly, so that the connection between the battery assembly and the upper vehicle body is released, and the battery assembly can be moved out downward, thereby helping to improve the assembly and disassembly efficiency.

In some embodiments, the vehicle body structure includes a third sealing member, where the third sealing member extends along a circumferential direction of the passenger compartment and seals a gap between the lower vehicle body and the upper vehicle body; a front portion of the third sealing member is in sealing engagement with the front compartment assembly; a middle portion of the third sealing member is in sealing engagement with the middle portion of the battery assembly; and a rear portion of the third sealing member is in sealing engagement with the rear floor assembly.

In the above technical solution, the provision of the third sealing member can achieve sealing between the upper vehicle body and the lower vehicle body, making water, dust, and the like not prone to entering the passenger compartment. In addition, in the up-down direction, the second connection structure connecting the battery assembly and the upper vehicle body can provide a pressing force to the third sealing member, which can not only improve the sealing effect but also improve the stability and service life of the third sealing member.

According to a third aspect, an embodiment of this application further provides a vehicle including the above vehicle body structure.

According to a fourth aspect, an embodiment of this application further provides an assembly and disassembly method of a lower vehicle body, where the lower vehicle body is the above lower vehicle body of a vehicle body structure. The assembly and disassembly method includes a disassembly process of disassembling the battery assembly separately; and the disassembly process includes: releasing connections of the battery assembly to the front compartment assembly, the rear floor assembly, and the upper vehicle body respectively; and moving the battery assembly downward, and releasing sealing of the battery assembly with the front compartment assembly, the rear floor assembly, and the upper vehicle body respectively, to disassemble the battery assembly separately.

In the above technical solution, the battery assembly is integrated into the lower vehicle body, which helps to reduce the number of parts and reduce the total weight of the vehicle body structure. In addition, when the battery assembly needs maintenance and replacement, only the battery assembly needs to be disassembled, without needing to disassemble the front compartment assembly and the rear floor assembly together, thereby greatly improving the convenience of assembly and disassembly, and helping to improve the efficiency of replacement and maintenance and improve the user experience.

In some embodiments, the assembly and disassembly method includes a reassembly process of the battery assembly; and the reassembly process includes: disposing a sealing member extending along a circumferential direction of the battery assembly on the battery assembly; and mounting the battery assembly from bottom to top to the front compartment assembly, the rear floor assembly, and the upper vehicle body, sealing the battery assembly with the front compartment assembly through a front portion of the sealing member, sealing the battery assembly with the rear floor assembly through a rear portion of the sealing member, and sealing the battery assembly with the upper vehicle body through a middle portion of the sealing member.

In the above embodiments, the provision of the sealing member helps to improve the airtightness at an engagement position after the battery assembly is reassembled, thereby improving the sealing effect of the battery assembly, an engine compartment, the passenger compartment, and the vehicle body structure.

According to a fifth aspect, an embodiment of this application further provides an assembly and disassembly method of a lower vehicle body, where the lower vehicle body is the above lower vehicle body of a vehicle body structure; the assembly and disassembly method includes an assembly process of the lower vehicle body; and the assembly process includes: disposing a first sealing member on the front portion of the battery assembly, and disposing a second sealing member on the rear portion of the battery assembly; and detachably mounting the battery assembly between the front compartment assembly and the rear floor assembly, enabling the first sealing member to seal a gap between the front portion of the battery assembly and the front compartment assembly, and enabling the second sealing member to seal a gap between the rear portion of the battery assembly and the rear floor assembly.

In the above embodiments, the battery assembly is integrated into the lower vehicle body, which helps to reduce the number of parts and reduce the total weight of the vehicle body structure. In addition, when the battery assembly needs maintenance and replacement, only the battery assembly needs to be disassembled, without needing to disassemble the front compartment assembly and the rear floor assembly together, thereby greatly improving the convenience of assembly and disassembly, and helping to improve the efficiency of replacement and maintenance and improve the user experience.

In some embodiments, the assembly and disassembly method includes an assembly process of mounting the lower vehicle body to the upper vehicle body; and the assembly process includes: disposing a third sealing member extending around the passenger compartment on an upper side of the lower vehicle body; and mounting the lower vehicle body upward to a lower side of the upper vehicle body, and enabling the third sealing member to seal a gap between the lower vehicle body and the upper vehicle body.

In the above embodiments, the third sealing member can achieve sealing between the upper vehicle body and the lower vehicle body, improving the airtightness of a peripheral edge at a bottom of the passenger compartment, and improving the waterproof and dustproof effect.

In some embodiments, the assembly and disassembly method includes a disassembly process of disassembling the battery assembly separately; and the disassembly process includes: releasing connections of the battery assembly to the front compartment assembly, the rear floor assembly, and the upper vehicle body respectively; and moving the battery assembly downward, and releasing sealing of the battery assembly with the front compartment assembly, the rear floor assembly, and the upper vehicle body respectively, to disassemble the battery assembly separately.

In the above embodiments, the battery assembly can be disassembled separately, without needing to disassemble the front compartment assembly, the rear floor assembly, and the upper vehicle body, thereby greatly improving the convenience of assembly and disassembly, and helping to improve the efficiency of replacement and maintenance and improve the user experience.

### BRIEF DESCRIPTION OF DRAWINGS

FIG. 1 is a schematic diagram of a vehicle body structure according to an embodiment of this application in a state, where an upper vehicle body is separated from a lower vehicle body;
FIG. 2 is a schematic diagram of a vehicle body structure according to an embodiment of this application in a state, where an upper vehicle body is connected to a lower vehicle body;
FIG. 3 is a schematic diagram of a vehicle body structure according to an embodiment of this application in a state, where a battery assembly is separated from an upper vehicle body;
FIG. 4 is a schematic structural diagram of a lower vehicle body according to an embodiment of this application;
FIG. 5 is an exploded view of a lower vehicle body and a sealing member according to an embodiment of this application;
FIG. 6 is a schematic structural diagram of a battery assembly according to an embodiment of this application;
FIG. 7 is a schematic diagram of a partial engagement structure of a battery assembly and an upper vehicle body according to an embodiment of this application; and
FIG. 8 is a flowchart of an assembly and disassembly method of a lower vehicle body according to an embodiment of this application.

### Reference signs:

vehicle body structure 100;
upper vehicle body 10;
lower vehicle body 20;
front compartment assembly 21; front anti-collision beam 211; front frame rail 212; front torque box 213;
battery assembly 22; box 202; frame 222; engagement surface 223; sill beam 224; cover 225; bottom plate 226; second avoidance hole 227;
rear floor assembly 23; rear anti-collision beam 231; rear frame rail 232; rear torque box 233; rear cross beam 234; rear floor 235;
first connection structure 31; first fastener 311; first mounting hole 312; second connection structure 32; second fastener 321; second mounting hole 322;
sealing member 40; third sealing member 41; first sealing portion 411; second sealing portion 412; third sealing portion 413; first sealing member 42; and second sealing member 43.

### DESCRIPTION OF EMBODIMENTS

To make the objectives, technical solutions, and advantages of the embodiments of this application clearer, the technical solutions in the embodiments of this application will be clearly and completely described below with reference to the accompanying drawings in the embodiments of this application. Apparently, the described embodiments are only some rather than all of the embodiments of this application. Based on the embodiments in this application, all other embodiments obtained by those of ordinary skill in the art without creative efforts shall fall within the protection scope of this application.

Unless otherwise defined, all technical and scientific terms used in this application have the same meanings as commonly understood by those skilled in the art to which this application belongs. In this application, the terms used in the specification of this application are merely for the purpose of describing specific embodiments and are not intended to limit this application. The terms "include", "comprise", "have", and any variations thereof in the specification and claims of this application and the above description of the drawings are intended to cover non-exclusive inclusions. The terms "first", "second", and the like in the specification and claims of this application or the above accompanying drawings are used to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments.

In the description of this application, it should be noted that unless otherwise specified and defined explicitly, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements. Those of ordinary skill in the art can understand specific meanings of the terms in this application as suitable to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates that the associated objects before and after are in an "or" relationship.

In the embodiments of this application, like reference signs denote like components, and for brevity, in different embodiments, detailed descriptions of like components are not repeated. It should be understood that, as shown in the accompanying drawings, dimensions such as thicknesses, lengths, and widths of various members and dimensions such as thicknesses, lengths, and widths of integrated apparatuses in the embodiments of this application are merely for illustrative purposes and should not constitute any limitations on this application.

In this application, "a plurality of" means more than two (inclusive).

Batteries can be used in, but not limited to, electrical apparatuses such as vehicles, vessels, or aircraft, and a power supply system for the electrical apparatus can be formed by batteries and the like to ensure the safety and reliability of the electrical apparatus during use. For example, the electrical apparatus may be, but is not limited to, a vehicle, a mobile phone, a tablet, a notebook computer, a vessel, a spacecraft, an electric toy, an electric tool, or the like. The vehicle may be a fuel vehicle, a gas vehicle, a new energy vehicle, or a rail vehicle. The new energy vehicle may be a battery electric vehicle, a hybrid electric vehicle, a plug-in hybrid electric vehicle, a range-extended electric vehicle, a fuel cell-powered vehicle, or the like.

In some related technologies, a vehicle has a complete chassis structure, including structures such as cross members, frame rails, and a floor. A battery pack is then mounted to the chassis of the vehicle, with many parts, complex structure, heavy weight, and difficult replacement and maintenance.

In some other related technologies, cell-to-chassis technology (that is, CTC technology) is a technology that integrates a battery pack and a chassis together, and has become a main research and development field for improving efficiency and reducing costs, which can reduce the number of parts and reduce the vehicle weight. However, the integrated design makes the assembly and disassembly operations of the battery pack complex. During replacement and maintenance, the integrated structure formed by the battery pack and the chassis needs to be disassembled from an upper vehicle body as a whole, and then the battery pack is separated from the chassis, and the battery pack can be then maintained and replaced. This is not conducive to after-sales maintenance.

Based on this, this application provides a lower vehicle body 20 of a vehicle body structure 100 that facilitates after-sales maintenance of a battery.

In this application, the vehicle body structure 100 refers to an arrangement form of various components constituting an entire vehicle body. The vehicle body structure 100 includes an upper vehicle body 10 and a lower vehicle body 20. The upper vehicle body 10 refers to a part of a vehicle configured to carry passengers and cargo. For example, the upper vehicle body 10 may include windows, doors, a passenger compartment, and the like. The lower vehicle body 20 includes a front compartment assembly 21, a battery assembly 22, and a rear floor assembly 23.

The front compartment assembly 21 is configured to play a role in transmitting front collision load. For example, the front compartment assembly 21 may include a front anti-collision beam 211, two front frame rails 212, and two front torque boxes 213. Front ends of the two front frame rails 212 are respectively connected to two ends of the front anti-collision beam 211, and rear ends of the two front frame rails 212 are respectively connected to the two front torque boxes 213. The front torque boxes 213 are connected to the battery assembly 22. When the vehicle is collided, the front anti-collision beam 211 can evenly bear the expansion load, and the collision load is shared by the two front frame rails 212 and the corresponding two front torque boxes 213, thereby reducing the damage to the passenger compartment.

The rear floor assembly 23 is a mounting carrier for system parts such as interior and exterior decoration parts and electrical appliances, and has important functions of carrying passengers, placing spare tires, and reducing fuel tank damage and passenger injury through its own deformation during a rear-collision process. For example, the rear floor assembly 23 may include a rear anti-collision beam 231, two rear frame rails 232, two rear torque boxes 233, a rear cross member 234, and a rear floor 235. Rear ends of the two rear frame rails 232 are respectively connected to two ends of the rear anti-collision beam 231, and front ends of the two rear frame rails 232 are respectively connected to the two rear torque boxes 233. The rear torque boxes 233 are connected to the battery assembly 22. The rear cross member 234 is connected to the two rear torque boxes 233. The rear floor 235 is mounted between the two rear frame rails 232.

The battery assembly 22 refers to a physical module including one or more battery cells to provide a higher voltage and capacity. For example, the battery assembly 22 mentioned in this application may include a battery module, a battery pack, or the like. Some battery assemblies 22 may each include a box 202 for accommodating one or more battery cells or battery modules. The box 202 can reduce or avoid the influence of liquids or other foreign objects on the charging or discharging of the battery cell.

The structure of the box 202 may be flexibly arranged. For example, in some embodiments, the box 202 may include a first shell and a second shell. The first shell and the second shell are joined together to form a sealed box 202. In some other embodiments, the box 202 includes a frame 222. The frame 222 has an upper end opening and a lower end opening. The frame 222 cooperates with other structures of the vehicle to achieve sealing. In still some other embodiments, the box 202 includes one of a cover 225 and a bottom plate 226 and the frame 222. The cover 225 is connected to an upper end of the frame 222. The bottom plate 226 is connected to a lower end of the frame 222, so that the box 202 has an end opening. The end opening can cooperate with other structures of the vehicle to achieve sealing. One of the cover 225 and the bottom plate 226 can be integrally formed with the frame 222. The cover 225, the bottom plate 226, and the frame 222 may alternatively be separate pieces connected together. Certainly, in some other embodiments, the box 202 may alternatively include all of the frame 222, the cover 225, and the bottom plate 226. All such configurations fall within the protection scope of this application.

The battery cell may include a lithium-ion secondary battery, a lithium-ion primary battery, a lithium-sulfur battery, a sodium-lithium-ion battery, a sodium-ion battery, a magnesium-ion battery, or the like, which is not limited in the embodiments of this application. The battery cell may be in a cylindrical shape, a flat shape, a rectangular shape, or other shapes, which is not limited in the embodiments of this application either. Battery cells are typically divided into three types by packaging method: cylindrical battery cell, prismatic battery cells, and pouch battery cells. The type of battery cell is not limited in the embodiments of this application either.

For example, the battery cell may include a housing, an electrode assembly, and an electrolyte. The housing is configured to accommodate the electrode assembly and the electrolyte. The electrode assembly is formed by a positive electrode plate, a negative electrode sheet, and a separator. Operation of the battery cell mainly depends on migration of metal ions between the positive electrode plate and the negative electrode plate.

The vehicle body structure 100 provided in this application includes an upper vehicle body 10 and a lower vehicle body 20. The lower vehicle body 20 is mounted to a lower side of the upper vehicle body 10 to cooperatively define a passenger compartment. The lower vehicle body 20 of the vehicle body structure 100 provided in this application includes a front compartment assembly 21, a battery assembly 22, and a rear floor assembly 23. A front portion of the battery assembly 22 is detachably engaged with the front compartment assembly 21, and a rear portion of the battery assembly 22 is detachably engaged with the rear floor assembly 23. The battery assembly 22 can be detachably engaged with the upper vehicle body 10 of the vehicle body structure 100 separately relative to the front compartment assembly 21 and the rear floor assembly 23.

In the description of this application, the orientations of top, bottom, front, rear, left, right, and the like are all based on the orientation of the vehicle, that is, a direction from the front of the vehicle to the rear of the vehicle is a front-to-rear direction, and a direction from the roof of the vehicle to the bottom of the vehicle is a top-to-bottom direction. A driver's seat and a passenger's seat are arranged along a left-right direction.

In the lower vehicle body 20 of the vehicle body structure 100 with the above structure, the battery assembly 22 is integrated into the lower vehicle body 20, which helps to reduce the number of parts and reduce the total weight of the lower vehicle body 20. In addition, the battery assembly 22 is separately disassembled relative to the front compartment assembly 21 and the rear floor assembly 23, so that when the battery assembly 22 needs maintenance and replacement, only the battery assembly 22 needs to be disassembled, without needing to disassemble the front compartment assembly 21 and the rear floor assembly 23 together, thereby greatly improving the convenience of assembly and disassembly, and helping to improve the efficiency of replacement and maintenance and improve the user experience.

The vehicle body structure 100 including the lower vehicle body 20 according to the embodiments of this application can be used in a vehicle. The vehicle may be a fuel vehicle, a gas vehicle, a new energy vehicle, or a rail vehicle. The new energy vehicle may be a battery electric vehicle, a hybrid electric vehicle, a plug-in hybrid electric vehicle, a range-extended electric vehicle, a fuel cell vehicle, or the like.

The following describes a lower vehicle body 20 of a vehicle body structure 100 according to an embodiment of a first aspect of this application and a vehicle body structure 100 according to an embodiment of a second aspect of this application with reference to the accompanying drawings. The vehicle body structure 100 includes an upper vehicle body 10 and the lower vehicle body 20 according to this embodiment of the first aspect of this application. The lower vehicle body 20 is mounted to a lower side of the upper vehicle body 10, and the upper vehicle body 10 cooperates with the lower vehicle body 20 to define a passenger compartment.

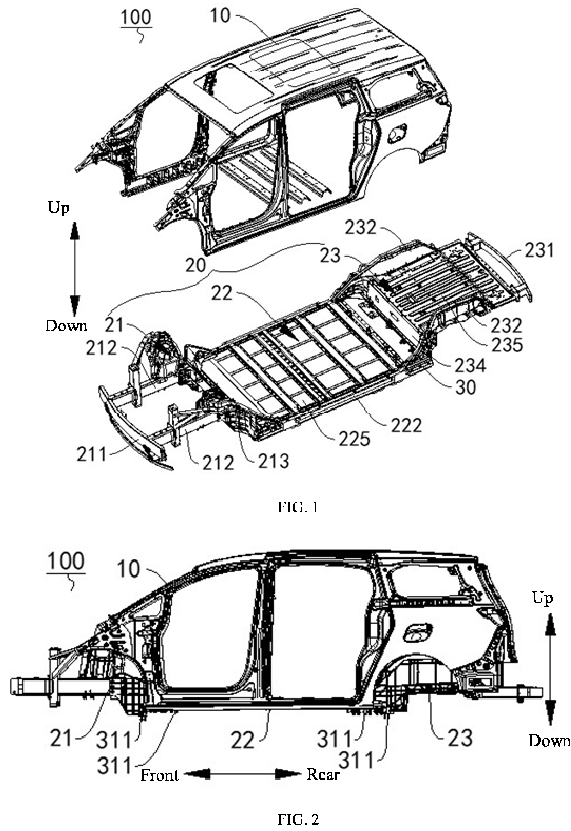

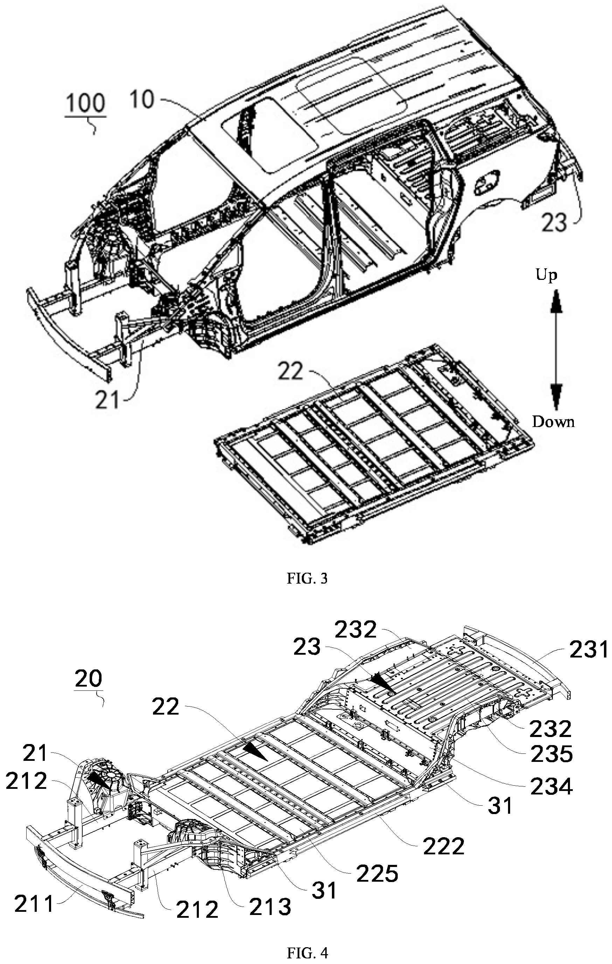

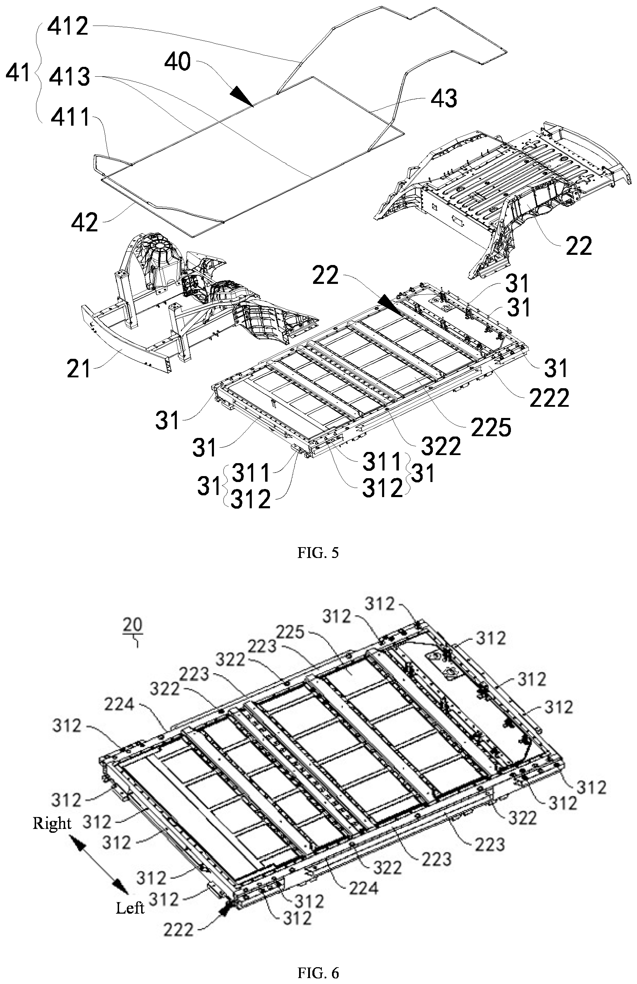

Referring to FIG. 1 to FIG. 5, FIG. 1 to FIG. 3 are schematic diagrams of a vehicle body structure 100 according to an embodiment of this application in different states. In FIG. 1, an upper vehicle body 10 is separated from a lower vehicle body 20. In FIG. 2, an upper vehicle body 10 is connected to a lower vehicle body 20. In FIG. 3, a battery assembly 22 is separated from an upper vehicle body 10. FIG. 4 is a schematic structural diagram of a lower vehicle body 20 according to an embodiment of this application. FIG. 5 is an exploded view of a lower vehicle body 20 and a sealing structure 40 according to an embodiment of this application. The vehicle body structure 100 includes: an upper vehicle body 10 and a lower vehicle body 20. The lower vehicle body 20 of the vehicle body structure 100 includes a front compartment assembly 21, a battery assembly 22, and a rear floor assembly 23. A front portion of the battery assembly 22 is detachably engaged with the front compartment assembly 21, and a rear portion of the battery assembly 22 is detachably engaged with the rear floor assembly 23. The battery assembly 22 can be detachably engaged with the upper vehicle body 10 of the vehicle body structure 100 separately relative to the front compartment assembly 21 and the rear floor assembly 23.

A detachable engagement manner between the front portion of the battery assembly 22 and the front compartment assembly 21 includes but is not limited to clearance fit, abutting, snap-fitting, bonding, connection via fasteners 30 (for example, bolts), and the like. Similarly, a detachable engagement manner between the rear portion of the battery assembly 22 and the rear floor assembly 23 includes but is not limited to clearance fit, abutting, snap-fitting, bonding, connection via fasteners 30, and the like.

A connection manner between the lower vehicle body 20 and the upper vehicle body 10 includes but is not limited to welding, snap-fitting, bonding, connection via fasteners 30, and the like. It should be noted that, in the front compartment assembly 21, the battery assembly 22, and the rear floor assembly 23 in the lower vehicle body 20, one or two of them may be directly connected to the upper vehicle body 10, or all three may be directly connected to the upper vehicle body 10. In an embodiment where the battery assembly 22 is directly connected to the upper vehicle body 10, the battery assembly 22 is detachably connected to the upper vehicle body 10.

The battery assembly 22 is detachably engaged with the upper vehicle body 10 separately relative to the front compartment assembly 21 and the rear floor assembly 23, in other words, when the battery assembly 22 needs to be disassembled, only the battery assembly 22 can be removed while keeping the front compartment assembly 21 and the rear floor assembly 23 connected to the upper vehicle body 10. For example, in an embodiment where the battery assembly 22 is directly connected to the front compartment assembly 21 and the rear floor assembly 23 and abuts against the upper vehicle body 10, the connection between the battery assembly 22 and the front compartment assembly 21 and the connection between the battery assembly 22 and the rear floor assembly 23 can be released while keeping the front compartment assembly 21 and the rear compartment assembly connected to the upper vehicle body 10 respectively, thereby facilitating the separation of the battery assembly 22 from the upper vehicle body 10. As another example, in an embodiment where the battery assembly 22 is connected to the upper vehicle body 10 through the fastener 30, the connection between the battery assembly 22 and the upper vehicle body 10 can be released without affecting the connections of the front compartment assembly 21 and the rear compartment assembly to the upper vehicle body 10, thereby facilitating the separation of the battery assembly 22 from the upper vehicle body 10.

Certainly, in an embodiment where the front compartment assembly 21 can be disassembled, when the front compartment assembly 21 is disassembled, the front compartment assembly 21 can be disassembled separately, can be removed together with the battery assembly 22, or can be removed together with the battery assembly 22 and the rear floor assembly 23. In an embodiment where the rear floor assembly 23 can be disassembled, when the rear floor assembly 23 is disassembled, the rear floor assembly 23 can be disassembled separately, can be removed together with the battery assembly 22, or can be removed together with the battery assembly 22 and the front compartment assembly 21. All such configurations fall within the protection scope of this application.

In the lower vehicle body 20 of the vehicle body structure 100 according to the embodiments of this application, the battery assembly 22 is integrated into the lower vehicle body 20, which helps to reduce the number of parts and reduce the total weight of the lower vehicle body 20. In addition, the battery assembly 22 is separately disassembled relative to the front compartment assembly 21 and the rear floor assembly 23, so that when the battery assembly 22 needs maintenance and replacement, only the battery assembly 22 needs to be disassembled, without needing to disassemble the front compartment assembly 21 and the rear floor assembly 23 together, thereby greatly improving the convenience of assembly and disassembly, and helping to improve the efficiency of replacement and maintenance and improve the user experience.

In some embodiments, the front portion of the battery assembly 22 abuts against the front compartment assembly 21. In some embodiments, the rear portion of the battery assembly 22 abuts against the rear floor assembly 23. In some embodiments, as shown in FIG. 4, the front portion of the battery assembly 22 abuts against the front compartment assembly 21, and the rear portion of the battery assembly 22 abuts against the rear floor assembly 23.

Abutting refers to that two components abut against each other and press against each other to improve the connection strength between the two components. Taking the battery assembly 22 and the front compartment assembly 21 as an example, an upper surface of the front portion of the battery assembly 22 may abut against a lower surface at a connection position of the front compartment assembly 21 to achieve reliable limiting and fixing of the battery assembly 22 and the front compartment assembly 21 in an up-down direction; or a side surface of the front portion of the battery assembly 22 facing away from the center of the battery assembly 22 may abut against a side surface of the front compartment assembly 21 to achieve reliable limiting and fixing of the battery assembly 22 and the front compartment assembly 21 in a horizontal direction (at least one of a left-right direction and a front-rear direction).

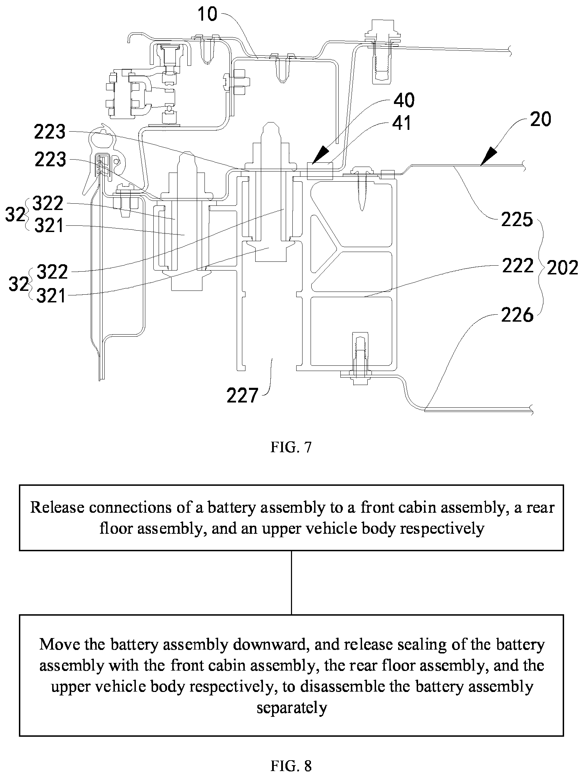

According to some embodiments of this application, as shown in FIG. 7, an upper surface of at least a part of a sidewall of the battery assembly 22 includes an engagement surface 223, and the engagement surface 223 abuts against the upper vehicle body 10. The engagement surface 223 abutting against the upper vehicle body 10 helps to improve the connection strength between the battery assembly 22 and the upper vehicle body 10.

The engagement surface 223 may be an annular surface continuously extending along a circumferential direction of the battery assembly 22 or may be a part of the upper surface of the sidewall. Both configurations can improve the overall strength to different degrees.

In some embodiments, the battery assembly 22 includes a frame 222. An upper surface of at least a part of a wall of the frame 222 includes the engagement surface 223. The frame 222 is a closed annular structure extending around the centerline of the battery assembly 22, where the annular structure includes but is not limited to a rectangular ring and a circular ring. For example, as shown in FIG. 6, the frame 222 is a closed rectangular ring-shaped structure, including a front frame wall, a left frame wall, a rear frame wall, and a right frame wall connected end to end in sequence.

In some embodiments, as shown in FIG. 6 and FIG. 7, the sidewall is provided with a plurality of engagement surfaces 223. The plurality of engagement surfaces 223 are arranged along an inside-outside direction of the sidewall (that is, a direction close to or away from the center) and are staggered along a height in the up-down direction. The plurality of engagement surfaces 223 respectively abut against the upper vehicle body 10.

For example, an upper surface of at least a part of the wall of the frame 222 includes a plurality of engagement surfaces 223, that is, upper surfaces of all walls of the frame 222 each include a plurality of engagement surfaces 223, upper surfaces of some of walls of the frame include a plurality of engagement surfaces 223, an upper surface of an entire sidewall of the frame includes a plurality of engagement surfaces 223, or a part of an upper surface of a sidewall of the frame includes a plurality of engagement surfaces 223.

As shown in FIG. 7, the plurality of engagement surfaces 223 are staggered in height in the up-down direction to make the upper surface formed as a stepped surface. For example, the engagement surface 223 extends along the horizontal direction. Two adjacent engagement surfaces 223 are connected through a connection surface extending along the up-down direction. The heights of the plurality of engagement surfaces 223 may gradually increase from inside to outside (that is, along a direction away from the center of the frame 222) or gradually decrease as shown in FIG. 7, or alternate between increasing and decreasing.

The plurality of engagement surfaces 223 respectively abut against the upper vehicle body 10, so that the upper vehicle body 10 forms a stepped surface with a matching shape. The stepped surface can be used for achieving limiting in the inside-outside direction (that is, a direction close to or away from the battery cell) and supporting limiting in the up-down direction, thereby helping to improve the connection strength between the battery assembly 22 and the upper vehicle body 10. In addition, multi-point connection in the inside-outside direction can be achieved to improve the connection reliability.

According to some embodiments of this application, the front compartment assembly 21 may include a first connection portion. The first connection portion is located on a side of the front portion of the battery assembly 22 along a left-right direction. A first connection member is detachably inserted through the first connection portion and the battery assembly 22 along the left-right direction. The rear floor assembly 23 includes a second connection portion. The second connection portion is located on a side of the rear portion of the battery assembly 22 along the left-right direction. A second connection member is detachably inserted through the second connection portion and the battery assembly 22 along the left-right direction.

The first connection portion may be a part of the front frame rail 212 of the front compartment assembly 21, or may be at least a part of the front torque box 213. The second connection portion may be a part of the rear frame rail 232 of the rear floor assembly 23, or may be at least a part of the rear torque box 233.

The specific structures of the first connection member and the second connection member are not limited, including but not limited to fasteners 30 such as bolts, snaps, motor-driven lock pins, and the like.

Taking the first connection member as an example, the first connection member can be disassembled and assembled along the left-right direction, that is, the first connection member can be connected to the first connection portion and the battery assembly 22 along the left-right direction, and can be disassembled along the left-right direction to achieve separation of the battery assembly 22 from the first connection portion, thereby facilitating the separation of the battery assembly 22 from the front compartment assembly 21. The assembly and disassembly of the first connection member can be performed on a side of the vehicle body structure 100, without interfering with the connection between the front compartment assembly 21 and the upper vehicle body 10, and without needing to disassemble the front compartment assembly 21.

For example, in some embodiments, the front compartment assembly 21 further includes a first upper vehicle body connection portion configured to be connected to the upper vehicle body 10. The first upper vehicle body connection portion can be spaced apart from the first connection portion. The rear floor assembly 23 further includes a second upper vehicle body connection portion configured to be connected to the upper vehicle body 10. The second upper vehicle body connection portion can be spaced apart from the second connection portion. Any connection manner such as welding, connection via fasteners 30, and the like can be used between the first upper vehicle body connection portion and the second upper vehicle body connection portion and the upper vehicle body 10. The first connection portion and the first upper vehicle body connection portion, and the second connection portion and the second upper vehicle body connection portion can be spaced along the front-rear direction, spaced along the left-right direction, spaced along the up-down direction, or the like. For example, the first upper vehicle body connection portion and the second upper vehicle body connection portion can be provided in a region shielded by the upper vehicle body 10, while the first connection portion and the second connection portion are provided in a region not shielded by the upper vehicle body 10. For example, the first connection portion and the second connection portion are both staggered from the upper vehicle body 10, or the upper vehicle body 10 is provided with avoidance openings that extend along the left-right direction and are opposite to the first connection portion and the second connection portion.

In some embodiments where connection is achieved through the first connection member and the second connection member, a first sealing member 42 is disposed between a side surface of the front portion of the battery assembly 22 and the first connection portion of the front compartment assembly 21. A second sealing member 43 is disposed between a side surface of the rear portion of the battery assembly 22 and the second connection portion of the rear floor assembly 23.

The first sealing member 42 can seal a gap between the front compartment assembly 21 and the battery assembly 22, and the second sealing member 43 can seal a gap between the rear floor assembly 23 and the battery assembly 22, thereby improving the airtightness between different components of the lower vehicle body 20, and helping to improve the airtightness of an engine compartment and a rear compartment.

In addition, the side surface of the battery assembly 22 refers to a surface of a side of the battery assembly 22 along the left-right direction, that is, in the left-right direction, the first sealing member 42 is located between the battery assembly 22 and the first connection portion. In addition, when the first connection member is connected to the battery assembly 22 and the first connection portion along the left-right direction, a pressing force can be supplied to the first sealing member 42, which can not only improve the sealing effect but also improve the stability and service life of the first sealing member 42. Similarly, the second sealing member 42 is in sealing contact with the side surface of the battery assembly 22, and the second connection member can also be used to improve the sealing effect and stability.

According to some embodiments of this application, referring to FIG. 1 and FIG. 4, the front portion of the battery assembly 22 is located below the front compartment assembly 21, and the rear portion of the battery assembly 22 is located below the rear floor assembly 23. In other words, the front portion of the battery assembly 22 and the front compartment assembly 21 are not staggered in the front-rear direction and are located on a side of the front compartment assembly 21 away from the upper vehicle body 10. The rear portion of the battery assembly 22 and the rear floor assembly 23 are not staggered in the front-rear direction and are located on a side of the rear floor assembly 23 away from the upper vehicle body 10.

Thus, after connection of a connection structure of the battery assembly 22 is released, the battery assembly 22 can move directly downward to separate from the upper vehicle body 10, the front compartment assembly 21, and the rear floor assembly 23, while the front compartment assembly 21 and the rear floor assembly 23 do not interfere with the disassembly movement of the battery assembly 22.

Certainly, in some other embodiments, the front portion of the battery assembly 22 and the front compartment assembly 21 can be completely staggered in the front-rear direction, and the rear portion of the battery assembly 22 and the rear floor assembly 23 can be completely staggered in the front-rear direction. That is, the front compartment assembly 21, the battery assembly 22, and the rear floor assembly 23 are strictly staggered in sequence from front to rear.

In addition, in the embodiments where the battery assembly 22 is located below the front compartment assembly 21 and the rear floor assembly 23, referring to FIG. 1 to FIG. 5, the battery assembly 22 may be provided with a first connection structure 31. The first connection structure 31 is configured to be connected to at least one of the front compartment assembly 21 and the rear floor assembly 23, and the first connection structure 31 can be disassembled and assembled along the up-down direction.

The first connection structure 31 can be disassembled and assembled along the up-down direction, and the first connection structure 31 is formed as a Z-direction connection structure, so that during disassembly, the first connection structure 31 can be disassembled from the lower side of the lower vehicle body 20 without interference from other structures of the upper vehicle body 10 and the lower vehicle body 20, facilitating the separate disassembly of the battery assembly 22 and making the operation more convenient.

It should be noted that the first connection structure 31 is disassembled and assembled along the up-down direction, where the up-down direction may be parallel to a vertical direction or at a certain included angle with the vertical direction, as long as the first connection structure 31 can be disassembled from the lower side.

In some embodiments, referring to FIG. 5, a first sealing member 42 is disposed between an upper surface of the front portion of the battery assembly 22 and the front compartment assembly 21, and the first sealing member 42 seals a gap between the battery assembly 22 and the front compartment assembly 21. A second sealing member 43 is disposed between an upper surface of the rear portion of the battery assembly 22 and the rear floor assembly 23, and the second sealing member 43 seals a gap between the rear floor assembly 23 and the battery assembly 22.

The provision of the first sealing member 42 and the second sealing member 43 can improve the airtightness between components of the lower vehicle body 20, thereby helping to improve the airtightness of the engine compartment and the rear compartment.

In addition, in the up-down direction, the first sealing member 42 is located between the battery assembly 22 and the front compartment assembly 21. In addition, when the first connection structure 31 is connected to the battery assembly 22 and the front compartment assembly 21 in the up-down direction, a pressing force can be supplied to the first sealing member 42, which can not only improve the sealing effect but also improve the stability and service life of the first sealing member 42. Similarly, the second sealing member 42 is in sealing contact with the upper surface of the battery assembly 22, and the first connection structure 31 can also be used to improve the sealing effect and stability.

In the embodiments of this application, the specific structure of the first connection structure 31 can be flexibly arranged, as long as the first connection structure 31 can be disassembled and assembled along the up-down direction.

For example, in some specific embodiments, the first connection structure 31 is fixedly disposed on the battery assembly 22, and the first connection structure 31 may be connected to the front compartment assembly 21 or the rear floor assembly 23 from bottom to top. Thus, the first connection structure 31 can move up and down synchronously with the battery assembly 22, so that the connection between the battery assembly 22 and the front compartment assembly 21 or the rear floor assembly 23 is released, and the battery assembly 22 can be moved out downward, thereby helping to improve the assembly and disassembly efficiency.

For example, the first connection structure 31 may be a snap fixedly disposed on the battery assembly 22; when the battery assembly 22 is moved upward, the snap may be joined together into the front compartment assembly 21 or the rear floor assembly 23; and when the battery assembly 22 is moved downward, the snap-fitting between the snap and the front compartment assembly 21 or the rear floor assembly 23 can be released. The first connection structure 31 may alternatively include a motor and a bolt connected to an output end of the motor, where the motor is mounted to the battery assembly 22, and the motor can drive the bolt to rotate. The bolt can rotate to achieve threaded connection and release connection to the front compartment assembly 21 or the rear floor assembly 23.

For example, in some specific embodiments, referring to FIG. 5 to FIG. 7, FIG. 6 is a schematic structural diagram of a battery assembly 22 according to an embodiment of this application. FIG. 7 is a schematic diagram of a partial engagement structure of a battery assembly 22 and an upper vehicle body 10 according to an embodiment of this application. The first connection structure 31 includes a first fastener 311 and a first mounting hole 312 provided on the battery assembly 22. The first mounting hole 312 extends along the up-down direction. The first fastener 311 is inserted upward through the first mounting hole 312 and connected to the front compartment assembly 21 or the rear floor assembly 23. The first fastener 311 includes but is not limited to a bolt, a stud, and the like.

The assembly and disassembly of the first fastener 311 can be operated from the lower side of the lower vehicle body 20, and during disassembly, the first fastener 311 moves downward without position interference with upper structures such as the upper vehicle body 10, the front compartment assembly 21, and the rear floor assembly 23, facilitating the separate assembly and disassembly of the battery assembly 22. In addition, the first fastener 311 can improve the connection strength between the battery assembly 22 and the front compartment assembly 21 or the rear floor assembly 23.

An extension length of the first mounting hole 312 along the up-down direction can be flexibly set. For example, in a region where a dimension of the battery assembly 22 in the up-down direction is small, the first mounting hole 312 can run through an upper surface and a lower surface of the battery assembly 22, which has a better effect of improving the connection strength.

In some specific embodiments, the battery assembly 22 is provided with a first avoidance hole located below the first mounting hole 312 and in communication with the first mounting hole 312. A diameter of the first avoidance hole is greater than an outer diameter of the first fastener 311. During assembly, the first fastener 311 can be inserted into the first mounting hole 312 after passing upward through the first avoidance hole, and the first fastener 311 has no tight fit with a wall of the avoidance hole 227. Thus, a length of the first fastener 311 along the up-down direction is less than a dimension of the battery assembly 22 along the up-down direction, helping to reduce the dimension of the first fastener 311 while ensuring the connection strength requirements. In addition, the first avoidance hole avoids the first fastener 311, so that the assembly and disassembly of the first fastener 311 are not interfered.

In some specific embodiments, as shown in FIG. 7, the box 202 of the battery assembly 22 includes a side beam and a reinforcing beam disposed on an outer side surface of the side beam. A dimension of the side beam along the up-down direction is greater than a dimension of the reinforcing beam along the up-down direction. A first mounting hole 312 on the reinforcing beam runs through upper and lower surfaces of the reinforcing beam. An opposite first avoidance hole is provided below the first mounting hole 312 on the side beam. First mounting holes 312 may be respectively provided at positions with different dimensions of the battery assembly 22. The first mounting hole 312 not opposite to the first avoidance hole may be provided in a region where the dimension of the battery assembly 22 in the up-down direction is small, and a bolt head of the first fastener 311 abuts against the lower surface of the battery assembly 22. The first mounting hole 312 opposite to the first avoidance hole may be provided in a region where the dimension of the battery assembly 22 in the up-down direction is large, and a bolt head of the first fastener 311 is located in the first avoidance hole and abuts against an edge of the first mounting hole 312. Thus, dimensions of the first fasteners 311 in the first mounting holes 312 at the positions with different dimensions of the battery assembly 22 are relatively approximate or equal, which can not only ensure connection stability but also help to improve the versatility of the first fastener 311, thereby reducing the costs.

According to some embodiments of this application, as shown in FIG. 5 to FIG. 7, a middle portion of the battery assembly 22 is provided with a second connection structure 32. The second connection structure 32 is connected to the upper vehicle body 10, and the second connection structure 32 can be disassembled and assembled along the up-down direction.

The second connection structure 32 is formed as a Z-direction connection structure, so that during disassembly, the second connection structure 32 can be disassembled from the lower side of the lower vehicle body 20 without interference from other structures of the upper vehicle body 10 and the lower vehicle body 20, facilitating the separate disassembly of the battery assembly 22 and making the operation more convenient. In addition, the first connection structure 31 and the second connection structure 32 cooperate to connect and fix the battery assembly 22 at the front portion, the middle portion, and the rear portion of the battery assembly 22, thereby improving the connection reliability of the battery assembly 22.

In some embodiments, the second connection structure 32 is fixedly disposed on the battery assembly 22 and adapted to be connected to the upper vehicle body from bottom to top. Thus, the second connection structure 32 can move up and down synchronously with the battery assembly 22, so that the connection between the battery assembly 22 and the upper vehicle body 10 is released, and the battery assembly 22 can be moved out downward, thereby helping to improve the assembly and disassembly efficiency. For example, the second connection structure 32 may be a snap or include a motor and a bolt connected to an output end of the motor, and the like.

In some embodiments, as shown in FIG. 5 to FIG. 7, the second connection structure 32 includes a second fastener 321 and a second mounting hole 322 provided on the battery assembly 22. The second mounting hole 322 extends along the up-down direction. The second fastener 321 is inserted upward through the second mounting hole 322 and connected to the upper vehicle body 10. The second fastener 321 includes but is not limited to a bolt, a stud, and the like.

The assembly and disassembly of the second fastener 321 can be operated from the lower side of the lower vehicle body 20, and during disassembly, the second fastener 321 moves downward without position interference with the upper structures such as the upper vehicle body 10, the front compartment assembly 21, the rear floor assembly 23, facilitating the separate assembly and disassembly of the battery assembly 22. In addition, the second fastener 321 can improve the connection strength between the battery assembly 22 and the upper vehicle body 10.

In some embodiments where the second mounting hole 322 is included, as shown in FIG. 7, the second mounting hole 322 can run through the upper and lower surfaces of the battery assembly 22, or an opposite second avoidance hole 227 may be provided below the second mounting hole 322. The second mounting hole 322 not opposite to the second avoidance hole 227 may be provided in a region where the dimension of the battery assembly 22 in the up-down direction is small, and a bolt head of the second fastener 321 abuts against the lower surface of the battery assembly 22. The second mounting hole 322 opposite to the second avoidance hole 227 may be provided in a region where the dimension of the battery assembly 22 in the up-down direction is large. Thus, dimensions of the second fasteners 321 in the second mounting holes 322 at positions with different dimensions of the battery assembly 22 are relatively approximate or equal, which can not only ensure connection stability but also help to improve the versatility of the second fastener 321, thereby reducing the costs.

In some embodiments, as shown in FIG. 5 and FIG. 7, the vehicle body structure 100 includes a third sealing member 41. The third sealing member 41 extends along a circumferential direction of the passenger compartment and seals a gap between the lower vehicle body 20 and the upper vehicle body 10. A front portion of the third sealing member 41 is in sealing engagement with the front compartment assembly 21. A middle portion of the third sealing member 41 is in sealing engagement with the middle portion of the battery assembly 22. A rear portion of the third sealing member 41 is in sealing engagement with the rear floor assembly 23.

For example, as shown in FIG. 5, the third sealing member 41 includes a first sealing portion 411, a second sealing portion 412, and a third sealing portion 413, forming full-circle sealing extending along the circumferential direction of the passenger compartment, and providing good sealing performance. The first sealing portion 411 seals a gap between an upper surface of the front compartment assembly 21 and the upper vehicle body 10. The second sealing portion 412 seals a gap between an upper surface of the rear floor assembly 23 and the upper vehicle body 10. The third sealing portion 413 seals a gap between the middle portion of the battery assembly 22 and the upper vehicle body 10 and specifically may be in sealing contact with upper surfaces of the left and right side beams of the frame 222.

The provision of the third sealing member 41 can achieve sealing between the upper vehicle body 10 and the lower vehicle body 20, making water, dust, and the like not prone to entering the passenger compartment. In addition, in the up-down direction, the third sealing member 41 is located between the upper vehicle body 10 and the lower vehicle body 20. The second connection structure 32 connecting the battery assembly 22 and the upper vehicle body 10 can provide a pressing force to the third sealing member 41, which can not only improve the sealing effect but also improve the stability and service life of the third sealing member 41.

In some embodiments where the first sealing member 42, the second sealing member 43, and the third sealing member 41 are included, referring to FIG. 5, the third sealing portion 413 of the third sealing member 41 can be located between the first sealing member 42 and the second sealing member 43 and in sealing connection with the first sealing member 42 and the second sealing member 43, thereby helping to further improve the sealing effect.

For the first sealing member 42, the second sealing member 43, and the third sealing member 41, referring to FIG. 5, the specific structures of the first sealing member 42, the second sealing member 43, and the third sealing member 41 can be flexibly set.

For example, in some embodiments, at least one of the first sealing member 42, the second sealing member 43, and the third sealing member 41 may be an elastic sealing ring. The elastic sealing ring is configured to be in press-fit engagement with the battery assembly 22. The elastic sealing ring is a sealing ring that can undergo elastic deformation. For example, the elastic sealing ring may be made of materials such as rubber and silicone. The pressure formed by the cooperation between the battery assembly 22 and the front compartment assembly 21, cooperation between the battery assembly 22 and the rear floor assembly 23, and cooperation between the lower vehicle body 20 and the upper vehicle body 10 is used to press the elastic sealing ring, thereby helping to improve the sealing effect. In addition, when the battery assembly 22 needs to be disassembled, the pressing force on the elastic sealing ring can be removed by releasing a fixing structure of the battery assembly 22. The elastic sealing ring can separate from the battery assembly 22, the front compartment assembly 21, the rear floor assembly 23, or the upper vehicle body 10, making the assembly and disassembly of the battery assembly 22 convenient.

As another example, in some embodiments, as shown in FIG. 5, at least one of the first sealing member 42, the second sealing member 43, and the third sealing member 41 may be an adhesive. The adhesive is configured to be in adhesive engagement with the battery assembly 22. The adhesive has adhesiveness, can achieve a better sealing effect, and is not prone to misalignment during assembly that otherwise affects the sealing effect. When the battery assembly 22 needs to be disassembled, the adhesive can be removed by tearing, without affecting the disassembly of the battery assembly 22.

In addition, in an embodiment where the third sealing member 41 is connected to the first sealing member 42 or the second sealing member 43, the adhesiveness of the adhesive can be used to achieve connection, which helps to improve the airtightness at a connection position.

In some specific embodiments, the adhesive may be a weak adhesive, that is, an adhesive with relatively weak adhesiveness, which achieves sealing while reducing the difficulty of tearing and removal. For example, the weak adhesive may be butyl mastic.

The types of the first sealing member 42, the second sealing member 43, and the third sealing member 41 may be the same or different. For example, all of the three are elastic sealing rings or all of the three are adhesives. For example, one may be an elastic sealing ring and the other two are adhesives.

In some specific embodiments, at least one of the first sealing member 42 and the second sealing member 43 may be an adhesive. The type of the adhesive is the same as the type of the adhesive of the third sealing member 41. For example, both the first sealing member 42 and the second sealing member 43 are butyl mastic. The adhesives of the same type have better mutual solubility, which can improve the airtightness at the connection position and help to improve the sealing effect after assembly and disassembly of the battery assembly 22.

The following describes a battery assembly 22 according to some embodiments of this application with reference to the accompanying drawings.

According to some embodiments of this application, referring to FIG. 6, the battery assembly 22 includes a box 202 and a battery cell provided in the box 202. The box 202 includes a frame 222 and a bottom plate 226. A peripheral edge of the bottom plate 226 is connected to a lower end of the frame 222, thereby defining a space for accommodating the battery cell and providing shielding and protection for the battery cell. Components for mounting the battery assembly 22 may be connected to the frame 222. For example, the upper vehicle body 10, the front compartment assembly 21, and the rear floor assembly 23 may be connected to the frame 222 to mount the battery assembly 22 from the edge, thereby helping to improve the stability of mounting the battery assembly 22.

The frame 222 and the bottom plate 226 may be separate pieces connected together or may be integrally formed pieces. The connection manner includes but is not limited to connection via fasteners, welding, adhesion, and the like.

In addition, the frame 222 includes a sill beam 224. The sill beam 224 is a very important protective component of the vehicle, which can effectively resist external intrusion during side collisions of the vehicle, protect the integrity of the passenger compartment, and reduce injuries to passengers in the vehicle.

The frame 222 includes the sill beam 224. In other words, the sill beam 224 is connected to a wall of the frame 222 to improve the overall structural strength of the box 202; or the sill beam 224 directly serves as the wall of the frame 222 to reduce the number of parts of the battery assembly 22 and reduce the space occupied by the box 202, thereby increasing the energy density, and reducing the weight of the entire vehicle.

It should be noted that an upper end of the frame 222 may have an upper end opening. The upper opening may be sealed by the upper vehicle body 10, and the upper end opening may also be covered and sealed by other structures of the battery assembly 22. Both configurations can keep the battery cells in a relatively closed space.

For example, a top end of the frame 22 is open to form a battery without an upper cover. A battery cell of the battery without an upper cover can adopt an upright arrangement, that is, an electrical connection portion of the battery cell is located on an upper side, so that the battery without an upper cover can adapt to different occasions.

In some embodiments, as shown in FIG. 6 and FIG. 7, the box 202 further includes a cover 225. A peripheral edge of the cover 225 is connected to the upper end of the frame 222. This helps to seal the upper end of the frame 222 through the cover 225 before the battery assembly 22 cooperates with the upper vehicle body 10, thereby helping to improve the sealing effect and operational convenience.

In some specific embodiments, as shown in FIG. 6 and FIG. 7, the upper cover 225 includes a front floor. In other words, the front floor is integrated into the battery assembly 22 and is disassembled and assembled together with the battery assembly 22. This helps to reduce the number of parts of the cover 225. For example, the front floor is directly connected to the frame 222 without other cover structures, thereby reducing the occupied space and weight of the box 202, and increasing the energy density.

In some embodiments, as shown in FIG. 6 and FIG. 7, the bottom plate 226 includes a bottom guard plate. In other words, the bottom guard plate is integrated into the battery assembly 22 and is disassembled and assembled together with the battery assembly 22. This improves the bottom puncture resistance of the battery assembly 22. In addition, this helps to reduce the number of parts of the bottom plate 226. For example, the bottom guard plate directly covers and seals a lower opening of the frame 222 without other cover structures, thereby reducing the occupied space and weight of the box 202, and increasing the energy density.

A vehicle according to an embodiment of a third aspect of this application includes the vehicle body structure 100 according to the above embodiments of this application. Thus, with the above vehicle body structure 100 used, the battery assembly 22 is integrated into the lower vehicle body 20, which helps to reduce the number of parts and reduce the total weight of the lower vehicle body 20. In addition, the battery assembly 22 is separately disassembled relative to the front compartment assembly 21 and the rear floor assembly 23, so that when the battery assembly 22 needs maintenance and replacement, only the battery assembly 22 needs to be disassembled, without needing to disassemble the front compartment assembly 21 and the rear floor assembly 23 together, thereby greatly improving the convenience of assembly and disassembly, and helping to improve the efficiency of replacement and maintenance, and improves the user experience.

According to a fourth aspect, this application further provides an assembly and disassembly method of a lower vehicle body 20. The lower vehicle body 20 is the lower vehicle body 20 of the above vehicle body structure 100. The related operations and structures of the above vehicle body structure 100 and the lower vehicle body 20 can all be incorporated into the assembly and disassembly method of this embodiment. Details are not described here again.

As shown in FIG. 8, the assembly and disassembly method includes an assembly and disassembly process of disassembling the battery assembly 22 separately. The assembly and disassembly process may include:
releasing connections of the battery assembly 22 to the front compartment assembly 21, the rear floor assembly 23, and the upper vehicle body 10 respectively; and
moving the battery assembly 22 downward, and releasing sealing of the battery assembly 22 with the front compartment assembly 21, the rear floor assembly 23, and the upper vehicle body 10 respectively, to disassemble the battery assembly 22 separately.

For example, the first fastener 311 configured to connect the front compartment assembly 21 and the battery assembly 22, the first fastener 311 configured to connect the rear floor assembly 23 and the battery assembly 22, and the second fastener 321 configured to connect the upper vehicle body 10 and the battery assembly 22 can be disassembled downward to release the connections of the battery assembly 22 to the front compartment assembly 21, the rear floor assembly 23, and the upper vehicle body 10 respectively. The disassembly process is not blocked or interfered by other components, and there is no need to release the connection between the front compartment assembly 21 and the upper vehicle body 10 and the connection between the rear floor assembly 23 and the upper vehicle body 10.

When the battery assembly 22 is moved downward, the first sealing member 42 between the front compartment assembly 21 and the battery assembly 22, the second sealing member 43 between the rear floor assembly 23 and the battery assembly 22, and the third sealing portion 413 between the upper vehicle body 10 and the battery assembly 22 are torn to release the sealing. Meanwhile, the first sealing portion 411 between the front compartment assembly 21 and the upper vehicle body 10 and the second sealing portion 412 between the rear floor assembly 23 and the upper vehicle body 10 can remain in a sealed state.

In the assembly and disassembly method of the lower vehicle body 20 according to the embodiments of this application, the battery assembly 22 is integrated into the lower vehicle body 20, which helps to reduce the number of parts and reduce the total weight of the vehicle body structure 100. In addition, when the battery assembly 22 needs maintenance and replacement, only the battery assembly 22 needs to be disassembled, without needing to disassemble the front compartment assembly 21 and the rear floor assembly 23 together, thereby greatly improving the convenience of assembly and disassembly, and helping to improve the efficiency of replacement and maintenance and improve the user experience.

In some embodiments, as shown in FIG. 5 and FIG. 7, the assembly and disassembly method further includes a reassembly process of the battery assembly 22. The reassembly process includes:
disposing a sealing member 40 extending along a circumferential direction of the battery assembly 22 on the battery assembly 22; and
mounting the battery assembly 22 from bottom to top to the front compartment assembly 21, the rear floor assembly 23, and the upper vehicle body 10, sealing the battery assembly 22 with the front compartment assembly 21 through a front portion of the sealing member 40, sealing the battery assembly 22 with the rear floor assembly 23 through a rear portion of the sealing member 40, and sealing the battery assembly 22 with the upper vehicle body 10 through a middle portion of the sealing member 40.

For example, an adhesive can be applied on the battery assembly 22 along the circumferential direction to form the sealing member 40. The sealing member 40 may include a ring formed by the first sealing member 42, the second sealing member 43, and the third sealing portion 413. After the battery assembly 22 is remounted on an integrated structure formed by the front compartment assembly 21, the rear floor assembly 23, and the upper vehicle body 10. The front portion of the sealing member 40 forms the first sealing member 42 and seals the gap between the front compartment assembly 21 and the battery assembly 22. The middle portion of the sealing member 40 forms the third sealing portion 413 and seals the gap between the battery assembly 22 and the upper vehicle body 10. The rear portion of the sealing member 40 forms the second sealing member 43 and seals the gap between the rear floor assembly 23 and the battery assembly 22. In addition, the middle portion of the sealing member 40 can be reconnected to the first sealing portion 411 and the second sealing portion 412 that are not disassembled, forming full-circle sealing of the passenger compartment, thereby improving the sealing performance.

The provision of the sealing member 40 helps to improve the airtightness at an engagement position after the battery assembly 22 is reassembled, thereby improving the sealing effect of the battery assembly 22, an engine compartment, the passenger compartment, and the vehicle body structure 100.

According to a fifth aspect, this application further provides an assembly and disassembly method of a lower vehicle body 20. The lower vehicle body 20 is the lower vehicle body 20 of the above vehicle body structure 100. The related operations and structures of the above vehicle body structure 100 and the lower vehicle body 20 can all be incorporated into the assembly and disassembly method of this embodiment. Details are not described here again.

The assembly and disassembly method includes an assembly process of the lower vehicle body 20. The assembly process includes:
disposing a first sealing member 42 on the front portion of the battery assembly 22, and disposing a second sealing member 43 on the rear portion of the battery assembly 22; and
detachably mounting the battery assembly 22 between the front compartment assembly 21 and the rear floor assembly 23, enabling the first sealing member 42 to seal a gap between the front portion of the battery assembly 22 and the front compartment assembly 21, and enabling the second sealing member 43 to seal a gap between the rear portion of the battery assembly 22 and the rear floor assembly 23.

The provision of the first sealing member 42 between the front compartment assembly 21 and the battery assembly 22 and the provision of the second sealing member 43 between the rear floor assembly 23 and the battery assembly 22 help to improve the airtightness at an engagement position of the battery assembly 22, thereby improving the sealing effect of the battery assembly 22, an engine compartment, and the lower vehicle body 20.

For example, the battery assembly 22 may be connected to the front compartment assembly 21 and the rear floor assembly 23 through the first connection structure 31, facilitating subsequent separate disassembly of the battery assembly 22.

In the assembly and disassembly method of the lower vehicle body 20 according to the above embodiments, the battery assembly 22 is integrated into the lower vehicle body 20, which helps to reduce the number of parts and reduce the total weight of the vehicle body structure 100. In addition, when the battery assembly 22 needs maintenance and replacement, only the battery assembly 22 needs to be disassembled, without needing to disassemble the front compartment assembly 21 and the rear floor assembly 23 together, thereby greatly improving the convenience of assembly and disassembly, and helping to improve the efficiency of replacement and maintenance and improve the user experience.

In some embodiments, the assembly and disassembly method includes an assembly process of mounting the lower vehicle body 20 to the upper vehicle body 10. The assembly process includes:
disposing a third sealing member 41 extending around a passenger compartment on an upper side of the lower vehicle body 20; and
mounting the lower vehicle body 20 upward to a lower side of the upper vehicle body 10, and enabling the third sealing member 41 to seal the gap between the upper vehicle body 10 and the lower vehicle body 20.

In the above embodiments, the third sealing member 41 can achieve sealing between the upper vehicle body 10 and the lower vehicle body 20, improving the airtightness of a peripheral edge at a bottom of the passenger compartment, and improving the waterproof and dustproof effect.

In addition, in an embodiment where an adhesive is applied to form the third sealing member 41, the third sealing member 41 can be connected to a rear end of the first sealing member 42 of the lower vehicle body 20 and a front end of the second sealing member 43, improving the sealing effect of the entire vehicle.

Further, the assembly and disassembly method of the lower vehicle body 20 may include a disassembly process of disassembling the battery assembly 22 separately. The disassembly process includes:
releasing connections of the battery assembly 22 to the front compartment assembly 21, the rear floor assembly 23, and the upper vehicle body 10 respectively; and
moving the battery assembly 22 downward, and releasing sealing of the battery assembly 22 with the front compartment assembly 21, the rear floor assembly 23, and the upper vehicle body 10 respectively, to disassemble the battery assembly 22 separately.

In the above embodiments, the battery assembly 22 can be disassembled separately, without needing to disassemble the front compartment assembly 21, the rear floor assembly 23, and the upper vehicle body 10, thereby greatly improving the convenience of assembly and disassembly, and helping to improve the efficiency of replacement and maintenance and improve the user experience.

The following describes a vehicle body structure 100 according to some specific embodiments of this application with reference to the accompanying drawings.

Referring to FIG. 1 to FIG. 7, the vehicle body structure 100 according to some specific embodiments of this application includes an upper vehicle body 10 and a lower vehicle body 20. The lower vehicle body 20 includes a front-back three-section combined structure formed by a front compartment assembly 21, a battery assembly 22, and a rear floor assembly 23. The front compartment assembly 21 and the battery assembly 22 are connected from bottom to top through bolts, and the rear floor assembly 23 and the battery assembly 22 are connected from bottom to top through bolts, so that the battery assembly 22 can be subsequently disassembled without being blocked. Sealing between the front compartment assembly 21 and the battery assembly 22 and sealing between the rear floor assembly 23 and the battery assembly 22 are achieved through weak connection by a butyl mastic adhesive. The upper vehicle body 10 and the lower vehicle body 20 are connected from bottom to top through the weak connection by the butyl mastic adhesive and the bolts, thereby achieving the airtightness and water sealing performance of the passenger compartment.

A specific assembly and disassembly process of the vehicle body structure 100 includes:
performing three-section combination on the front compartment assembly 21, the battery assembly 22, and the rear floor assembly 23, applying butyl mastic at a connection position between the front compartment assembly 21 and the battery assembly 22 and a connection position between the rear floor assembly 23 and the battery assembly 22, and connecting through bolts;
applying butyl mastic at a connection position between the lower vehicle body 20 and the upper vehicle body 10 and connecting through bolts to obtain the vehicle body structure 100, facilitating subsequent assembly into an entire vehicle, where the butyl mastic applied in the two steps is mutually fused and cured;
lifting the entire vehicle and supporting a region of the battery assembly 22 from a lower side when the battery assembly 22 needs maintenance;
removing the bolts associated with the battery assembly 22, allowing the battery assembly 22 to be decoupled separately, and allowing a sealing member 40 corresponding to a peripheral edge of the battery assembly 22 to be damaged;
applying butyl mastic in a closed loop on the battery assembly 22 during reassembly, and increasing the amount of butyl mastic at a joint between a first sealing portion 411 and a second sealing portion 412 that are not disassembled; and
moving the battery assembly 22 to an engagement position with the upper vehicle body 10, and tightening the bolts to fix the battery assembly 22 to complete the assembly.

In the above embodiments, the battery assembly 22 can be decoupled separately for separate disassembly, facilitating later maintenance and replacement, and the battery assembly 22 can achieve good air sealing and water sealing effects in the assembled state.

It should be noted that in absence of conflicts, the embodiments and features in the embodiments in this application may be combined with each other.

The foregoing descriptions are merely preferred embodiments of this application and are not intended to limit this application. Those skilled in the art understand that this application may have various modifications and variations. Any modifications, equivalent replacements, improvements, and the like made within the spirit and principle of this application shall be included in the protection scope of this application.

## Claims

1. A lower vehicle body of a vehicle body structure, wherein the lower vehicle body comprises a front compartment assembly, a battery assembly, and a rear floor assembly; a front portion of the battery assembly is detachably engaged with the front compartment assembly, and a rear portion of the battery assembly is detachably engaged with the rear floor assembly; and the battery assembly is adapted to be detachably engaged with an upper vehicle body of the vehicle body structure separately relative to the front compartment assembly and the rear floor assembly.

2. The lower vehicle body of a vehicle body structure according to claim 1, wherein the front portion of the battery assembly abuts against the front compartment assembly; and/or the rear portion of the battery assembly abuts against the rear floor assembly.

3. The lower vehicle body of a vehicle body structure according to claim 1 or 2, wherein the front compartment assembly comprises a first connection portion; the first connection portion is located on a side of the front portion of the battery assembly along a left-right direction; a first connection member is detachably inserted through the first connection portion and the battery assembly along the left-right direction; the rear floor assembly comprises a second connection portion; the second connection portion is located on a side of the rear portion of the battery assembly along the left-right direction; and a second connection member is detachably inserted through the second connection portion and the battery assembly along the left-right direction.

4. The lower vehicle body of a vehicle body structure according to claim 3, wherein a first sealing member is disposed between a side surface of the front portion of the battery assembly and the first connection portion; and a second sealing member is disposed between a side surface of the rear portion of the battery assembly and the second connection portion.

5. The lower vehicle body of a vehicle body structure according to claim 1 or 2, wherein the front portion of the battery assembly is located below the front compartment assembly, and the rear portion of the battery assembly is located below the rear floor assembly; the battery assembly is provided with a first connection structure; the first connection structure is configured to be connected to at least one of the front compartment assembly and the rear floor assembly; and the first connection structure is adapted to be assembled and disassembled along an up-down direction.

6. The lower vehicle body of a vehicle body structure according to claim 5, wherein a first sealing member is disposed between an upper surface of the front portion of the battery assembly and the front compartment assembly; and a second sealing member is disposed between an upper surface of the rear portion of the battery assembly and the rear floor assembly.

7. The lower vehicle body of a vehicle body structure according to claim 5 or 6, wherein the first connection structure is fixedly disposed on the battery assembly and adapted to be connected to the front compartment assembly or the rear floor assembly from bottom to top.

8. The lower vehicle body of a vehicle body structure according to claim 5 or 6, wherein the first connection structure comprises a first fastener and a first mounting hole provided on the battery assembly; the first mounting hole extends along the up-down direction; and the first fastener is inserted upward through the first mounting hole and connected to the front compartment assembly or the rear floor assembly.

9. The lower vehicle body of a vehicle body structure according to claim 8, wherein
the battery assembly is provided with a first avoidance hole located below the first mounting hole and in communication with the first mounting hole; and a diameter of the first avoidance hole is greater than an outer diameter of the first fastener.

10. The lower vehicle body of a vehicle body structure according to claim 4 or 6, wherein the first sealing member and/or the second sealing member is an elastic sealing ring; and the elastic sealing ring is configured to be in press-fit engagement with the battery assembly.

11. The lower vehicle body of a vehicle body structure according to claim 4 or 6, wherein the first sealing member and/or the second sealing member is an adhesive; and the adhesive is configured to be in adhesive engagement with the battery assembly.

12. The lower vehicle body of a vehicle body structure according to claim 11, wherein a material of the adhesive comprises butyl mastic.

13. The lower vehicle body of a vehicle body structure according to any one of claims 1 to 12, wherein the battery assembly comprises a box and a battery cell provided in the box, and the box comprises:
a frame, wherein the frame comprises a sill beam, and the front compartment assembly and the rear floor assembly are both connected to the frame; and
a bottom plate, wherein a peripheral edge of the bottom plate is connected to a lower end of the frame.

14. The lower vehicle body of a vehicle body structure according to claim 13, wherein
the box further comprises a cover, and a peripheral edge of the cover is connected to an upper end of the frame.

15. The lower vehicle body of a vehicle body structure according to claim 14, wherein the cover comprises a front floor.

16. A vehicle body structure, comprising an upper vehicle body and the lower vehicle body of a vehicle body structure according to any one of claims 1 to 15, wherein the lower vehicle body is mounted to a lower side of the upper vehicle body to cooperatively define a passenger compartment.

17. The vehicle body structure according to claim 16, wherein an upper surface of at least a part of a sidewall of the battery assembly comprises an engagement surface, and the engagement surface abuts against the upper vehicle body.

18. The vehicle body structure according to claim 17, wherein the sidewall is provided with a plurality of engagement surfaces, and the plurality of the engagement surfaces are arranged along an inside-outside direction of the sidewall and staggered along a height in an up-down direction.

19. The vehicle body structure according to claim 16 or 17, wherein a middle portion of the battery assembly is provided with a second connection structure, and the second connection structure is connected to the upper vehicle body and adapted to be assembled and disassembled along an up-down direction.

20. The vehicle body structure according to claim 19, wherein the second connection structure comprises a second fastener and a second mounting hole provided on the battery assembly; wherein the second mounting hole extends along the up-down direction; and the second fastener is inserted upward through the second mounting hole and connected to the upper vehicle body.

21. The vehicle body structure according to claim 19, wherein the second connection structure is fixedly disposed on the battery assembly and adapted to be connected to the upper vehicle body from bottom to top.

22. The vehicle body structure according to any one of claims 16 to 21, comprising a third sealing member, wherein the third sealing member extends along a circumferential direction of the passenger compartment and seals a gap between the lower vehicle body and the upper vehicle body; a front portion of the third sealing member is in sealing engagement with the front compartment assembly; a middle portion of the third sealing member is in sealing engagement with a middle portion of the battery assembly; and a rear portion of the third sealing member is in sealing engagement with the rear floor assembly.

23. A vehicle, comprising the vehicle body structure according to any one of claims 16 to 22.

24. An assembly and disassembly method of a lower vehicle body, wherein the lower vehicle body is the lower vehicle body of a vehicle body structure according to any one of claims 1 to 15; the assembly and disassembly method comprises a disassembly process of disassembling the battery assembly separately; and the disassembly process comprises:
releasing connections of the battery assembly to the front compartment assembly, the rear floor assembly, and the upper vehicle body respectively; and
moving the battery assembly downward, and releasing sealing of the battery assembly with the front compartment assembly, the rear floor assembly, and the upper vehicle body respectively, to disassemble the battery assembly separately.

25. The assembly and disassembly method of a lower vehicle body according to claim 24, wherein the assembly and disassembly method comprises a reassembly process of the battery assembly; and the reassembly process comprises:
disposing a sealing member extending along a circumferential direction of the battery assembly on the battery assembly; and
mounting the battery assembly from bottom to top to the front compartment assembly, the rear floor assembly, and the upper vehicle body, sealing the battery assembly with the front compartment assembly through a front portion of the sealing member, sealing the battery assembly with the rear floor assembly through a rear portion of the sealing member, and sealing the battery assembly with the upper vehicle body through a middle portion of the sealing member.

26. An assembly and disassembly method of a lower vehicle body, wherein the lower vehicle body is the lower vehicle body of a vehicle body structure according to any one of claims 1 to 15; the assembly and disassembly method comprises an assembly process of the lower vehicle body; and the assembly process comprises:
disposing a first sealing member on the front portion of the battery assembly, and disposing a second sealing member on the rear portion of the battery assembly; and
detachably mounting the battery assembly between the front compartment assembly and the rear floor assembly, enabling the first sealing member to seal a gap between the front portion of the battery assembly and the front compartment assembly, and enabling the second sealing member to seal a gap between the rear portion of the battery assembly and the rear floor assembly.

27. The assembly and disassembly method of a lower vehicle body according to claim 26, wherein the assembly and disassembly method comprises an assembly process of mounting the lower vehicle body to the upper vehicle body; and the assembly process comprises:
disposing a third sealing member extending around a passenger compartment on an upper side of the lower vehicle body; and
mounting the lower vehicle body upward to a lower side of the upper vehicle body, and enabling the third sealing member to seal a gap between the lower vehicle body and the upper vehicle body.

28. The assembly and disassembly method of a lower vehicle body according to claim 26, wherein the assembly and disassembly method comprises a disassembly process of disassembling the battery assembly separately; and the disassembly process comprises:
releasing connections of the battery assembly to the front compartment assembly, the rear floor assembly, and the upper vehicle body respectively; and
moving the battery assembly downward, and releasing sealing of the battery assembly with the front compartment assembly, the rear floor assembly, and the upper vehicle body respectively, to disassemble the battery assembly separately.
